Europäisches Patentamt

European Patent Office

Office européen des brevets

(19)

(11) Publication number: **0 179 462 B1**

(12) # EUROPEAN PATENT SPECIFICATION

(45) Date of publication of patent specification: **01.04.92**   (51) Int. Cl.⁵: **G02C 5/22**

(21) Application number: **85113471.8**

(22) Date of filing: **23.10.85**

(54) **Eyeglass frame and method of assembling same.**

(30) Priority: **23.10.84 US 663869**

(43) Date of publication of application:
**30.04.86 Bulletin 86/18**

(45) Publication of the grant of the patent:
**01.04.92 Bulletin 92/14**

(84) Designated Contracting States:
**AT BE CH DE FR GB IT LI LU NL SE**

(56) References cited:
FR-A- 1 589 632       FR-A- 2 305 751
FR-A- 2 363 807       GB-A- 638 379
US-A- 4 076 394       US-A- 4 084 889
US-A- 4 145 124

(73) Proprietor: **AMERICAN OPTICAL CORPORA-
TION**
**14 Mechanic Street**
**Southbridge, MA 01550(US)**

(72) Inventor: **Grendol, Clark L.**
**9 Podunk Road**
**Sturbridge Massachusetts 01566(US)**

(74) Representative: **Diehl, Hermann O. Th., Dr.**
**Diehl & Partner Flüggenstrasse 13**
**W-8000 München 19(DE)**

EP 0 179 462 B1

## Description

This invention relates to eyeglass frames, and a method of assembling same. More particularly, the invention is in the field of eyeglass frames which are easily and quickly assembled.

The majority of eyeglass frames manufactured today include a lens supporting structure to which two temples are pivotally attached by means of a hinge assembly. The hinges can be metal or plastic, and a pin secures the hinge of the lens support to the hinge of the temple. The hinges are glued, screwed or fastened by some other means to the lens support and temple. Assembly of such frames utilizing metal or plastic hinges with a screw or pin assembly requires a number of manufacturing steps which complicates the assembly proces.

Other eyeglass frames, like the one disclosed in US-A-4 084 889 by Visher, published April 18, 1978, use a spring assisted hinge assembly. A forwardly extending hinge portion of a temple member is removably inserted in an integral hinge socket of a lens supporting structure.

Eyeglass frames are also manufactured using other known pivoting connecting assemblies which provide free movement of the temples from the lens supporting structure. The basic requirement for any pivoting connector assembly is that the temple movement be made easily and the pivoting assembly be strong and reliable. The principal problem with all known assemblies, as in the case of the hinge assemblies described above, is that the assemblies are rather complex. This complexity results in added hardware costs as well as added assembly costs. In addition, some of these assemblies provide inadequate strength and reliability.

It is therefore a principal object of the present invention to provide as eyeglass frame which is easily and quickly assembled. This object is solved by the eyeglass frame according to the main claim. Advantageous features of the eyeglass frame are evident from subclaims 2 to 10. A further object of the invention is to provide an easy and quick method of assembling an eyeglass frame. This object is solved according to claim 11. Further advantageous features of this method are evident from subclaim 12.

The present invention allows production of an eyeglass frame the components of which can be inexpensively manufactured. The present invention also provides an eyeglass frame which is strong and reliable.

According to the invention an eyeglass frame and a method of assembling such a frame is provided in which the temple of the eyeglass frame includes a first extension portion projecting from the temple. This first extension portion includes a means to support a pin around which the temple pivots. A temple receiving member of a lens supporting structure includes upper and lower walls, the facing surfaces of which include a ramped slot. The first extension portion of the temple with the pin inserted in the pin support is aligned with the temple receiving member so that the pin slides through the ramped slots. As the temple portion is pushed further through the slots, the upper and lower walls of the temple receiving member separate until the pin falls into a pin capturing hole in the temple receiving member where it locks thereby pivotally securing the temple to the supporting structure. In an alternate embodiment, a spring loaded pin is employed, at least one end of which depresses to allow the pin to pass through the slots.

These and other features and objects of the present invention will be more clearly understood from the following detailed description of the preferred embodiment which should be read in light of the accompanying drawings.

Fig. 1 is a perspective view of an eyeglass frame according to the present invention in which the temples are attached to the lens supporting structure through the unique hinge assembly of the present invention;

Fig. 2 is a perspective view of the hinge assembly of the eyeglass frame of the present invention;

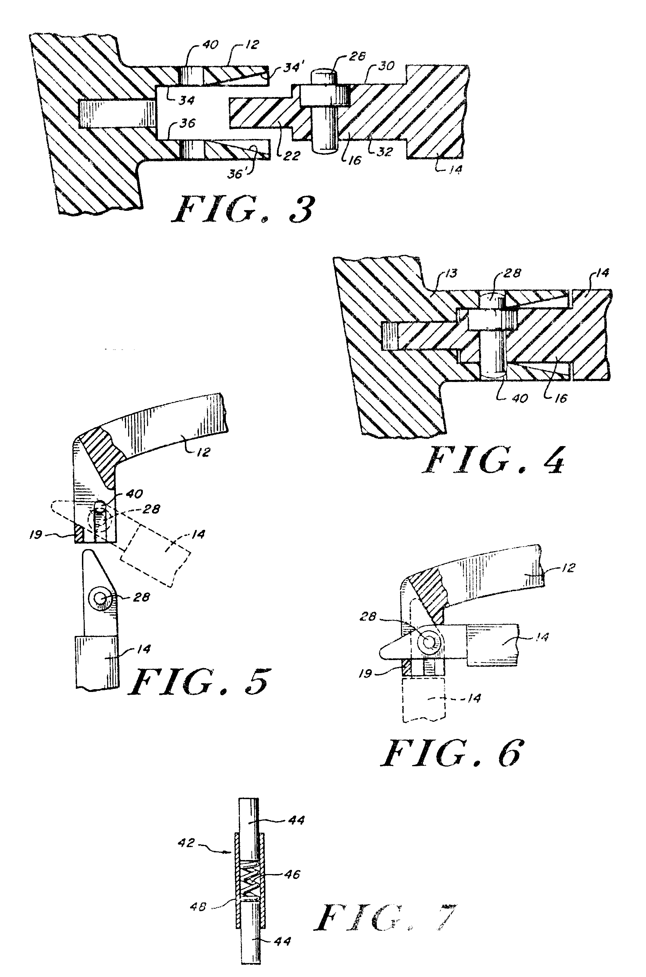

Fig. 3 is a cross sectional view of the hinge portions of the lens supporting structure and temple in an unassembled state;

Fig. 4 is a cross sectional view similar to that of Fig. 3 in which the temple portion and lens supporting structures are fully assembled;

Fig. 5 is a top plan view of the eyeglass frame of the present invention showing the temple in a solid line in a position prior to assembly and showing the temple in phantom in a position during assembly;

Fig. 6 is a top plan view of an eyeglass frame of the present invention in which the temple is shown in solid line in a closed position and is shown in phantom in an open position; and

Fig. 7 is a cross-sectional view of an alternate embodiment of the connecting pin which is to be supported by the temple of the eyeglass frame of the present invention.

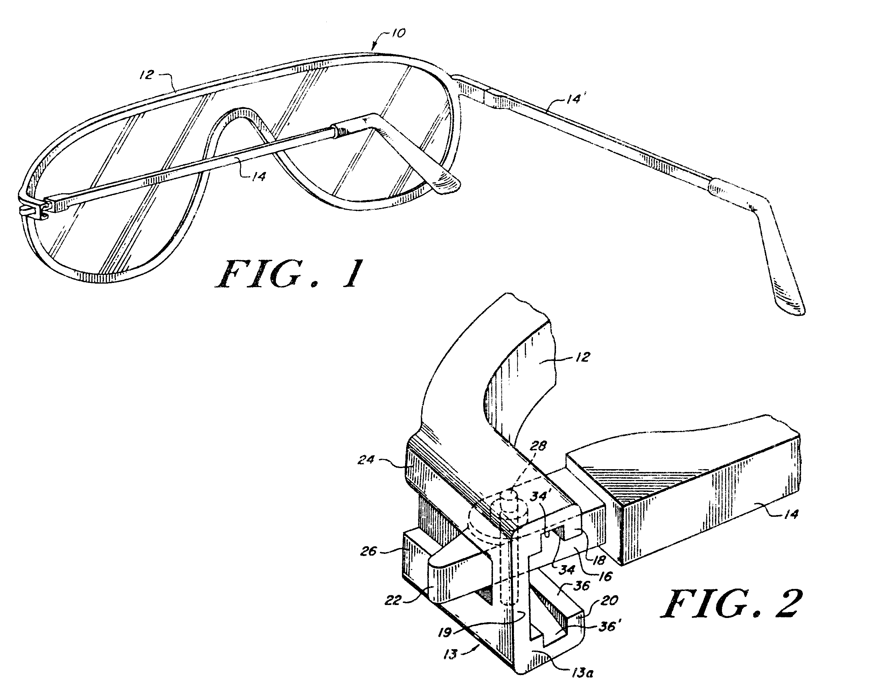

In accordance with the present invention, the eyeglass frame 10, shown in Fig. 1, includes a lens supporting structure 12 and two temples 14,14'. An integral temple receiving member 13 extends in a generally perpendicular direction from each end of the lens supporting structure 12, and a temple 14 is pivotably connected to each of the temple receiving members 13. The temples 14, 14' pivot between an open position which enables a user to wear the eyeglasses and support the temples with his ears and a closed position which allows the eyeglasses to be stored. In Fig. 1 temple 14 is in a closed position and temple 14' is in an open position.

The frame hinge assembly of the present invention, shown in Fig. 2, enables a temple 14 to be easily and quickly secured to the lens supporting structure 12. The end of temple 14, which in an assembled frame is interconnected with temple receiving member 13, includes a first extension portion 16 designed to fit within a first slot formed between top 18 and bottom 20 inner walls of the temple receiving member 13. Extending from this first extension portion 16 is a second extension portion 22 which is designed to fit within a second slot created between upper 24 and lower 26 outer walls of the temple receiving member 13. In the preferred embodiment, the first slot has a smaller depth than the temple 14 and the second slot has a depth smaller than the first slot. The temple 14 is fabricated so that the first extension portion 16 includes a pin receiving hole in which a pin 28 is inserted. This hole runs from the upper surface 30 of the first extension portion 16 to the lower surface 32 of the first extension portion 16 so that a pin may extend from both the upper and lower surfaces 30, 32 of the first extension portion 16.

The interior upper 34 and lower 36 surfaces of the temple receiving member 13 include a ramped slot 34', 36', with the distance between opposed, ramped surfaces of the slots 34', 36' decreasing from the end 13a of temple receiving member 13 furthest from the position where a lens is supported to the pin-receiving hole 40 of the temple receiving member 13. At the end 13a of the temple receiving member 13, the ramped surfaces are separated from each other a distance greater than the length of pin 28.

In operation, the pin 28 is positioned so that the top end of the pin 28 slides into the upper slot 34' and the lower portion of the pin 28 slides into lower slot 36'. The temple 14, held in an open position as shown in a solid line in Fig. 5, is pushed towards the lens supporting structure 12 thereby forcing the upper and lower surfaces 34, 36 of the temple receiving member 13 apart from each other. As the temple 14 is forced closer to the lens supporting structure 12, surfaces 34, 36 continue to be separated from each other until the pin 28 falls into pin-receiving hole 40 at which point the surfaces 34, 36 collapse to substantially meet the surfaces 30, 32 of the first extension portion 16 of the temple 14. The pin 28 is then locked in hole 40. To facilitate assembly, the temple 14 may be pivoted into contact with temple angular position limiting wall 19 once the temple 14 has been partially inserted into the temple receiving member 13. As shown in phantom in Fig. 5, this pivoting action forces the pin 28 towards the pin-receiving hole 40. With the pin locked in hole 40, the frame of the present invention provides a very strong hinge since the temple can only be separated from the lens supporting structure 12 by forcing apart the upper and lower surfaces 34, 36 of the temple receiving member 13. Under normal use, such a forcing apart is virtually impossible.

The temple angular position limiting wall 19 integrally positioned between the upper and lower outside walls 24, 26 operates to limit the movement of the temple 14 in both the open and closed position. As shown in Fig. 6 the temple 14 pivots from an open to closed position making contact in both the open and closed position with temple limiting wall 19.

The lens supporting structure 12 and the temples 14 are preferably fabricated from a polymer, particularly cellulose acetate propionate. The lens supporting structure 12 and/or the temples 14 may, however, be metal parts. When the lens supporting structure 12 is fabricated from a metal, the metal should be such that it will flex under the force of the pin 28 so as to allow the forcing apart of the upper and lower surfaces 34, 36 of the temple 14. It is also possible, however, to utilize a "stiffer" metal. Such a frame utilizes a pin 42 having at least one spring loaded insert 44 which depresses the spring 46 when the temple 14 is urged through the temple receiving member 13. When the pin reaches the pin-receiving hole 40, the spring 46 forces the inserts 44 outwardly from the pin housing 48 thereby locking the pin in the pin receiving hole 40. Obviously, the length of pin 42 must be greater than the closest distance between the upper and lower surfaces 34, 36 of the temple receiving member 13.

The eyeglass frame and assembly method taught by the present invention provides a sturdy and reliable eyeglass frame which is easily and quickly produced without a complex hinge assembly. As a result, both manufacturing and assembling costs are kept to a minimum thereby making the eyeglass frame a very appealing alternative to prior art eyeglass frame structures.

While the invention has been described with reference to its preferred embodiment, it is understood that various modifications and alterations will occur to those skilled in the art from the foregoing description and the drawings.

**Claims**

1. An eyeglass frame (10) comprising:

a temple (14, 14') having a first extension (16) projecting from one end of said temple (14, 14'), said first extension (16) including a means for supporting a pin (28, 42) so that the ends of said pin extend from upper (30) and lower (32) surfaces of said first extension (16);

a pin (28, 42) having a length greater than the distance between said upper (30) and lower (32) surfaces of said first extension (16) and supported by said means;

a lens supporting structure (12) including a temple receiving member (13) having a recessed portion (34, 36) for receiving said first extension (16) of said temple (14, 14'), said recessed portion having opposed upper (34) and lower (36) interior walls characterized in that either the temple receiving member (13) is made of a semi-rigid material which permits said walls to flex apart under application of a force, or the pin (42) has at least one spring loaded insert (44) which permits the pin (42) to depress under pressure;

in that each of said walls includes a ramped slot (34', 36'), each of said ramped slots (34', 36') including a surface opposed to the corresponding surface of the other ramped slot with the distance between said opposed surfaces of said ramped slots (34', 36') decreasing from the open end (13a) of the recessed portion of said temple receiving member (13) so as to connect said temple (14, 14') by a pin capturing means (40) in the form of recesses or holes in said lens supporting structure which rotatably locks said pin (28, 42) in position in said lens supporting structure, the dimensions of said supporting member and said pin being such that when said temple (14, 14') is inserted in said temple receiving member (13) with each end of said pin (28, 42) aligned with one of said ramped slots (34', 36'), either said upper and lower walls of said temple receiving member (13) are caused to flex in opposite directions, or said pin is depressed, upon the force of the urging of said temple (14, 14') into said temple receiving member (13) until said pin (28, 42) is captured by said pin capturing means (40).

2. The eyeglass frame of claim 1 wherein said temple (14, 14') further comprises a second extension portion (22) projecting from said first extension portion (16) of said temple (14, 14').

3. The eyeglass frame of claim 2 wherein said temple receiving member (13) of said lens supporting structure (12) further comprises means (24, 26) for capturing said second recessed extension (22) of said temple (14, 14').

4. The eyeglass frame of claim 3 wherein said means (24, 26) for capturing said second extension (22) of said temple (14, 14') allows said second extension (22) to project from said temple receiving member (13) when said temple (14, 14') is in a closed position.

5. The eyeglass frame of one of claims 1 to 4 further comprising means (19) for limiting angular pivoting movement of said temple (14, 14').

6. The eyeglass frame of one of claims 1 to 5 wherein said temple (14, 14') and/or said lens supporting structure (12) is fabricated from a polymer.

7. The eyeglass frame of one of claims 1 to 6 wherein said temple (14, 14') and/or said lens supporting structure (12) is fabricated from a metal.

8. The eyeglass frame of one of claims 1 to 7 wherein said pin is a metal pin or a plastic pin.

9. The eyeglass frame of one of claims 1 to 8 wherein said pin (28) is integrally fabricated into said first extension (16) of said temple (14, 14').

10. The eyeglass frame of one of claims 1 to 9 wherein said means for supporting said pin in said temple is a hole fabricated in said first extension (16) of said temple (14, 14').

11. A method of assembling an eyeglass frame including at least one temple and a lens supporting structure to which the temples are pivotably connected, comprising the steps of

providing a first extension (16) portion of the temple (14, 14'), said first extension portion (16) having upper (30) and lower (32) surfaces and a means to support a pin (28, 42);

providing a pin (28, 42) designed to be supported by said pin supporting means and having a length greater than the distance between said upper (30) and lower (32) surfaces of said first extension portion;

providing a lens supporting structure (12) having a temple receiving member (13) for pivotably receiving each of said at least one temple (14, 14') said temple receiving member (13) having upper (34) and lower (36) interior walls each of which include a ramped slot, (34', 36'), each of said ramped slots (34', 36') including opposed upper and lower surfaces with the distance between said opposed upper and lower surfaces of said ramped slots decreasing from an end of said temple receiving member (13) designed to abut said temple to a pin capturing means (40) which rotatably locks said pin;

placing said pin support means in said first extension of the temple (14, 14');

positioning said temple in an open position adjacent said temple receiving member (13) of the lens supporting structure (12) so that each end of said pin (28, 42) is aligned with one of said ramped slots;

sliding said temple (14, 14') into said temple receiving member (13) of said lens supporting structure (12) with said pin (28, 42) being guided by said ramped slots (34', 36') thereby forcing said upper and lower walls of said temple receiving member to flex in opposite directions;

stopping said sliding when said pin is captured by said pin capturing means (40).

12. The method of assembling an eyeglass frame of claim 11 further comprising the steps of:

providing a temple angular position limiting means (19);

pivoting said temple (14, 14') into a position between an open and closed position after said temple has been inserted into said temple receiving member (13) but before said pin has been captured by said pin capturing means (40) thereby causing said temple to contact said temple angular position limiting means (19); and

pivoting said temple to said closed position to force said pin into said pin capturing means (19).

**Revendications**

1. Monture de lunettes (10) comprenant :
   - une branche (14, 14') ayant un premier prolongement (16) s'étendant depuis une extrémité de ladite branche (14, 14'), ledit premier prolongement (16) comprenant un moyen de support pour une goupille (28, 42), de telle sorte que les extrémités de ladite goupille dépassent des surfaces supérieure (30) et inférieure (32) dudit premier prolongement (16) ;
   - une goupille (28, 42) ayant une longueur supérieure à la distance comprise entre lesdites surfaces supérieure (30) et inférieure (32) dudit premier prolongement (16) et supportée par ledit moyen ;
   - une structure de support de verres (12) comprenant un élément récepteur de branche (13) ayant une partie évidée (34, 36) pour recevoir ledit premier prolongement (16) de ladite branche (14, 14'), ladite partie évidée ayant des parois intérieures supérieure (34) et inférieure (36) opposées,

caractérisée en ce que soit l'élément récepteur de branche (13) est fait d'un matériau semi-rigide qui permet auxdites parois de s'écarter par flexion sous l'application d'une force ; soit la goupille (42) comporte au moins une pièce rapportée (44) soumise à l'effet d'un ressort qui permet à la goupille (42) d'être comprimée sous l'effet d'une pression ;
et en ce que chacune desdites parois comporte une fente formant rampe (34', 36'), chacune desdites fentes formant rampes (34', 36') présentant une surface opposée à la surface correspondante de l'autre fente formant rampe, la distance entre lesdites surfaces opposées desdites fentes formant rampes (34', 36') allant en décroissant depuis l'extrémité ouverte (13a) de la partie évidée dudit élément récepteur de branche (13), de façon à connecter ladite branche (14, 14') par des moyens d'emprisonnement de goupille (40) se présentant sous la forme d'évidements ou de trous prévus dans ladite structure de support de verres qui verrouillent ladite goupille (28, 42) en place en lui permettant de tourner dans ladite structure de support de verres, les dimensions dudit élément support et de ladite goupille étant telles que lorsque ladite branche (14, 14') est introduite dans ledit élément récepteur de branche (13), avec chaque extrémité de ladite goupille (28, 42) alignée avec l'une desdites fentes formant rampes (34', 36'), soit l'une et l'autre desdites parois supérieure et inférieure dudit élément récepteur de branche (13) sont contraintes à fléchir dans des directions opposées, soit ladite goupille est comprimée, sous l'effet de la force résultant de la poussée de la branche (14, 14') jusque dans ledit élément récepteur de branche (13) jusqu'à ce que ladite goupille (28, 42) soit emprisonnée par lesdits moyens d'emprisonnement de goupille (40).

2. Monture de lunettes selon la revendication 1, dans laquelle ladite branche (14, 14') comporte, en outre, un second prolongement (22) se projetant à partir dudit premier prolongement (16) de ladite branche (14, 14').

3. Monture de lunettes selon la revendication 2, dans laquelle ledit élément récepteur de branche (13) de ladite structure de support de verres (12) comporte, en outre, des moyens (24, 26) pour emprisonner ledit second prolongement évidé (22) de ladite branche (14, 14').

4. Monture de lunettes selon la revendication 3, dans laquelle lesdits moyens (24, 26) d'emprisonnement dudit second prolongement (22) de ladite branche (14, 14') permettent audit second prolongement (22) de se projeter à partir dudit élément récepteur de branche (13) lorsque ladite branche (14, 14') est en position fermée.

5. Monture de lunettes selon l'une des revendications 1 à 4 comprenant, en outre, des moyens (19) pour limiter le mouvement de pivotement angulaire de ladite branche (14, 14').

6. Monture de lunettes selon l'une des revendications 1 à 5, dans laquelle ladite branche (14, 14') et/ou ladite structure de support de verres (12) est(sont) fabriquée(s) en un polymère.

7. Monture de lunettes selon l'une des revendications 1 à 6, dans laquelle ladite branche (14, 14') et/ou ladite structure de support de verres (12) est(sont) fabriquée(s) en métal.

8. Monture de lunettes selon l'une des revendications 1 à 7, dans laquelle ladite goupille est une goupille métallique ou une goupille en matière plastique.

9. Monture de lunettes selon l'une des revendications 1 à 8, dans laquelle ladite goupille (28) est fabriquée d'un seul tenant avec ledit premier prolongement (16) de ladite branche (14, 14').

10. Monture de lunettes selon l'une des revendications 1 à 9, dans laquelle lesdits moyens de support de ladite goupille dans ladite branche sont constitués d'un trou ménagé dans ledit premier prolongement (16) de ladite branche (14, 14').

11. Procédé d'assemblage d'une monture de lunettes comprenant au moins une branche et une structure de support de verres sur laquelle les branches sont montées pivotantes qui consiste à :

prévoir un premier prolongement (16) sur une branche (14, 14'), ledit premier prolongement (16) ayant des surfaces supérieure (30) et inférieure (32) et un moyen de support pour une goupille (28, 42) ;

prévoir une goupille (28, 42) conçue pour être supportée par ledit moyen de support de goupille et ayant une longueur supérieure à la distance comprise entre lesdites surfaces supérieure (30) et inférieure (32) dudit premier prolongement ;

prévoir une structure de support de verres (12) ayant un élément récepteur de branche (13) pour recevoir, de façon pivotante, chacune desdites (au moins une) branches (14, 14'), ledit élément récepteur de branche (13) ayant des parois intérieures, supérieure (34) et inférieure (36), dont chacune présente une fente formant rampe (34', 36'), chacune desdites fentes formant rampes (34', 36') présentant des surfaces supérieure et inférieure opposées, la distance comprise entre lesdites surfaces supérieure et inférieure opposées desdites fentes formant rampes allant en décroissant depuis une extrémité dudit élément récepteur de branche (13) pour amener ladite branche en butée contre des moyens d'emprisonnement de goupille (40) qui verrouillent ladite goupille tout en en permettant la rotation ;

à mettre en place ledit moyen de support de goupille dans ledit premier prolongement de la branche (14, 14') ;

à positionner ladite branche en position ouverte au voisinage dudit élément récepteur de branche (13) de ladite structure de support de verres (12), de façon que chaque extrémité de ladite goupille (28, 42) soit alignée avec l'une desdites fentes formant rampes ;

à faire glisser ladite branche (14, 14') dans ledit élément récepteur de branche (13) de ladite structure de support de verres (12), ladite goupille (28, 42) étant guidée par lesdites fentes formant rampes (34', 36') forçant ainsi lesdites parois supérieure et inférieure dudit élément récepteur de branche à fléchir dans des directions opposée ; et

à mettre un terme audit glissement lorsque la goupille est emprisonnée par lesdits moyens d'emprisonnement de goupille (40).

12. Procédé d'assemblage d'une monture de lunettes selon la revendication 11, qui consiste en outre :

à prévoir des moyens de limitation de la position angulaire des branches (19) ;

à faire pivoter ladite branche (14, 14') jusqu'à une position comprise entre une position ouverte et une position fermée après que ladite branche ait été insérée dans ledit élément récepteur de branche (13), mais avant que ladite goupille ait été emprisonnée par lesdits moyens d'emprisonnement de goupille (40), amenant ainsi ladite branche en contact avec lesdits moyens de limitation de position angulaire de branche (19) ; et

à faire pivoter ladite branche vers ladite position fermée pour contraindre ladite goupille à pénétrer dans lesdits moyens d'emprisonnement de goupille (19).

**Patentansprüche**

1. Brillengestell (10) mit
einem Bügel (14, 14') mit einem ersten Fortsatz (16), der an einem Ende des Bügels (14, 14') herausragt, wobei der erste Fortsatz (16) ein Mittel aufweist, das einen Stift (28, 42) derart haltert, daß sich die Enden des Stiftes von der oberen Oberfläche (30) und der unteren Oberfläche (32) des ersten Fortsatzes erstrecken,

einem Stift (28, 42), dessen Länge größer ist als der Abstand zwischen der oberen Oberfläche (30) und der unteren Oberfläche (32) des ersten Fortsatzes (16) und der von dem besagten Mittel gehaltert wird,

einer Brillenglasfassung (12) mit einem einen vertieften Bereich (34, 36) aufweisenden Bügelaufnahmeelement (13) zur Aufnahme des ersten Fortsatzes (16) des Bügels (14, 14'), wobei der vertiefte Bereich eine obere Innenwand (34) und eine untere Innenwand (36) aufweist, die einander gegenüberliegen,

dadurch gekennzeichnet,

daß entweder das Bügelaufnahmeelement (13) aus einem halbstarren Material besteht, welches ein Auseinanderbiegen der Wände unter Druckanwendung erlaubt, oder der Stift (42) wenigstens einen federbelasteten Einsatz (44) aufweist, der es erlaubt, den Stift (42) unter Druck niederzudrücken, und daß jede der besagten Wände einen abgeschrägten Schlitz (34', 36') aufweist und die abgeschrägten Schlitze (34', 36') jeweils eine Fläche aufweisen, die der entsprechenden Fläche des anderen abgeschrägten Schlitzes (34', 36') gegenüberliegt, wobei sich der Abstand zwischen den gegenüberliegenden Flächen der abgeschrägten Schlitze (34', 36') vom offenen Ende (13a) des vertieften Bereichs des Bügelaufnahmeelements (13) ausgehend verringert, um den Bügel (14, 14') in der Brillenglasfassung mittels eines als Ausnehmung oder Loch ausgebildeten Stiftfesthaltemittels (40) zu befestigen, welches den Stift (28, 42) drehbar in der Brillenglasfassung arretiert, wobei die Fassung und der Stift so bemessen sind, daß wenn der Bügel (14, 14') in dem Bügelaufnahmeelement (13) so eingesetzt ist, daß die Enden des Stiftes (28, 42) jeweils mit einem der abgeschrägten Schlitze (34', 36') ausgerichtet ist, entweder die obere und untere Wand des Bügelaufnahmeelements (13) in entgegengesetzte Richtungen gebogen werden oder der Stift niedergedrückt wird durch den Druck, der beim Einschieben des Bügels (14, 14') in das Bügelaufnahmeelement (13) ausgeübt wird bis der Stift (28, 42) vom Stiftfesthaltemittel (40) erfaßt wird.

2. Brillengestell nach Anspruch 1, in dem der Bügel (14, 14') desweiteren einen zweiten Fortsatz (22) aufweist, der aus dem ersten Fortsatz (16) des Bügels (14, 14') herausragt.

3. Brillengestell nach Anspruch 2, in dem das Bügelaufnahmeelement (13) der Brillenglasfassung (12) desweiteren Mittel (24, 26) zum Erfassen des zweiten abgesetzten Fortsatzes (22) des Bügels (14, 14') aufweist.

4. Brillengestell nach Anspruch 3, in dem die Mittel (24, 26) zum Erfassen des zweiten Fortsatzes (22) des Bügels (14, 14') so ausgebildet sind, daß der zweite Fortsatz (22) aus dem Bügelaufnahmeelement (13) herausragt, wenn sich der Bügel (14, 14') in einer geschlossener Stellung befindet.

5. Brillengestell nach einem der Ansprüche 1 bis 4, in dem desweiteren ein Mittel (19) zur Begrenzung von Schwenkbewegungen des Bügels (14, 14') vorgesehen ist.

6. Brillengestell nach einem der Ansprüche 1 bis 5, in dem der Bügel (14, 14') und/oder die Brillenglasfassung (12) aus einem Polymer gefertigt sind.

7. Brillengestell nach einem der Ansprüche 1 bis 6, in dem der Bügel (14, 14') und/oder die Brillenglasfassung (12) aus Metall gefertigt sind.

8. Brillengestell nach einem der Ansprüche 1 bis 7, in dem der Stift ein Metallstift oder Plastikstift ist.

9. Brillengestell nach einem der Ansprüche 1 bis 8, in dem der Stift (28) einstückig mit dem ersten Fortsatz (16) des Bügels (14, 14') ausgebildet ist.

10. Brillengestell nach einem der Ansprüche 1 bis 9, in dem das Mittel zur Halterung des Stiftes in dem Bügel ein in dem ersten Fortsatz (16) des Bügels (14, 14') ausgebildetes Loch ist.

11. Verfahren zum Zusammenbau eines Brillengestells, das wenigstens einen Bügel sowie eine Brillenglasfassung, an der die Bügel schwenkbar befestigt sind, aufweist, mit folgenden Verfahrensschritten:

Vorsehen eines ersten Fortsatzes (16) des Bügels (14, 14'), wobei dieser erste Fortsatz (16) eine obere Oberfläche (30) und eine untere Oberfläche (32) sowie ein Mittel zur Halterung eines Stiftes (28, 42) aufweist,

Vorsehen eines Stiftes (28, 42), der so ausgebildet ist, daß er von dem Mittel zur Halterung des Stiftes gehalten wird, und daß seine Länge größer ist als der Abstand zwischen der oberen (30) und unteren (32) Oberfläche des ersten Fortsatzes,

Vorsehen einer Brillenglasfassung (12) mit einem Bügelaufnahmeelement (13) zur schwenkbaren Aufnahme jedes des wenigstens einen Bügels (14, 14'), wobei das Bügelaufnahmeelement (13) eine obere (34) und eine untere (36) Innenwand aufweist, die jeweils einen abgeschrägten Schlitz (34', 36') aufweisen, und wobei diese abgeschrägten Schlitze (34', 36') einander gegenüberliegende obere und untere Flächen aufweisen, wobei der Abstand zwischen den einander gegenüberliegenden oberen und unteren Flächen der abgeschrägten Schlitze von einem Ende des Bügelaufnahmeelements (13) ausgehend abnimmt und so ausgelegt ist, daß der Bügel in Eingriff mit einem Stiftfesthaltemittel (40) kommt, welches den Stift drehbar arretiert,

Anordnen des Mittels zur Halterung des Stiftes im ersten Fortsatz des Bügels (14, 14'),

Anordnen des Bügels in offener Stellung neben dem Bügelaufnahmeelement (13) der Brillenglasfassung (12) derart, daß jedes Ende des Stiftes (28, 42) mit einem der abgeschrägten Schlitze ausgerichtet ist,

Einschieben des Bügels (14, 14') in das Bügelaufnahmeelement (13) der Brillenglasfassung (12), wobei der Stift (28, 42) von den abgeschrägten Schlitzen (34', 36') geführt wird und dabei die obere Wand und die untere Wand des Bügelaufnahmeelements zu einer Biegung in gegensätzliche Richtungen zwingt,

Beendigung des Einschiebens, sobald der Stift von dem Stiftfesthaltemittel (40) erfasst ist.

12. Verfahren zum Zusammenbau eines Brillengestells nach Anspruch 11, mit folgenden weiteren Verfahrensschritten:

Vorsehen eines Mittels (19) zur Begrenzung von Schwenkbewegungen des Bügels,

Verschwenken des Bügels (14, 14') in eine Position zwischen einer offenen und geschlossenen Stellung nachdem der Bügel in das Bügelaufnahmeelement (13) eingesetzt worden ist, jedoch bevor der Stift von dem Stiftfesthaltemittel (40) erfasst wurde, wodurch der Bügel mit dem Mittel (19) zur Begrenzung von Schwenkbewegungen des Bügels in Kontakt gebracht wird, und

Verschwenken des Bügels in die geschlossene Stellung, um den Stift in das Stiftfesthaltemittel (19) zu drücken.

FIG. 1

FIG. 2

FIG. 3

FIG. 4

FIG. 5

FIG. 6

FIG. 7